**Europäisches Patentamt**

**European Patent Office**

**Office européen des brevets**

(11) Veröffentlichungsnummer: **0 349 522**
**A2**

## EUROPÄISCHE PATENTANMELDUNG

(21) Anmeldenummer: **89890144.2**

(22) Anmeldetag: **17.05.89**

(51) Int. Cl.⁵: **A 61 C 7/00**

(30) Priorität: **31.05.88 AT 1419/88**

(43) Veröffentlichungstag der Anmeldung:
**03.01.90 Patentblatt 90/01**

(84) Benannte Vertragsstaaten:
**AT BE CH DE ES FR GB IT LI NL SE**

(71) Anmelder: **Ronay, Franz, Dr.**
**Rudolfsplatz 14**
**A-1010 Wien (AT)**

(72) Erfinder: **Ronay, Franz, Dr.,**
**Rudolfsplatz 14**
**A-1010 Wien (AT)**

**Ronay, Georg, Dr.,**
**Rudolfsplatz 14**
**A-1010 Wien (AT)**

(74) Vertreter: **Atzwanger, Richard, Dipl.-Ing.**
**Mariahilfer Strasse 1c**
**A-1060 Wien (AT)**

(54) **Verfahren sowie Vorrichtung zur Herstellung einer orthodontischen Apparatur.**

(57) Verfahren sowie Vorrichtung zur Herstellung einer orthotontischen Apparatur, welche aus Brackets und aus einem mit diesen verbindbaren orthodontischen Draht besteht, wobei aus einem Malokklusionsmodell ein ideales Gebißmodell hergestellt wird, worauf dieses sowie eine Führungsseinrichtung in Bezug aufeinander fixiert werden. Für eine dem Behandlungsziel optimal dienende Apparatur werden an der Führungseinrichtung (2) geführte, mit je einem Bracket (4) versehene Bracketträger (3) der Zahnreplik entsprechend angeordnet, wonach die Brackets (4) in ihrer gewünschten Lage mittels der Bracketträger (3) derart justiert werden, daß die Basen ihrer Öffnungen (5) aufeinandergereiht eine mindestens segmentweise stetig verlaufende Krümmung ergeben, welche den idealen Verlauf (8) des orthodontischen Drahtes angibt, wobei ein Negativ (11) aus aushärtbarem Material hergestellt wird und jeweils ein vom Bracketträger (3) abragender Referenzteil (10) mit dem Negativ verbunden wird, worauf diese Referenzeinheiten von Modell und Führungseinrichtung gelöst und auf die Patientenzähne aufgesetzt werden, worauf jedes Bracket am Patientenzahn fixiert, von der übrigen Referenzeinheit getrennt und mit dem orthodontischen Draht verbunden wird.

Fig. 2

EP 0 349 522 A2

# Beschreibung

## Verfahren sowie Vorrichtung zur Herstellung einer orthodontischen Apparatur

Die Erfindung betrifft ein Verfahren zur Herstellung einer orthodontischen Apparatur zur Korrektur der Lage der Zähne eines Patienten, welche Apparatur aus den einzelnen Zähnen zugeordneten, Öffnungen aufweisenden Brackets und aus einem mit diesen verbindbaren orthodontischen Draht besteht, wobei vom Gebiß des Patienten ein Malokklusionsmodell angefertigt wird, welches in die einzelnen Zahnrepliken unterteilt wird, worauf durch Anordnung der einzelnen Zahnrepliken dieses Modelles in deren dem Behandlungsziel entsprechender Lage ein ideales Gebißmodell hergestellt wird, worauf das Gebißmodell sowie eine Führungseinrichtung in einer bestimmten Lage in Bezug aufeinander fixiert werden, sowie eine Vorrichtung zur Durchführung des erfindungsgemäßen Verfahrens.

Bei der Herstellung einer orthodontischen Apparatur ist es erforderlich, diese jeweils auf das Gebiß des Patienten individuell abgestimmt und zugleich in ihrer Lage eindeutig definiert anzufertigen.

So ist aus der US-PS 3 477 128 bekannt, für die orthodontische Apparatur solche Brackets zu verwenden, deren Konstruktion auf die durchschnittlichen anatomischen Formen und Positionen der einzelnen Zahntypen innerhalb eines Gebisses abgestimmt ist, wodurch die Anzahl der notwendigen Biegungen des verwendeten orthodontischen Drahtes wesentlich, jedoch keinesfalls zur Gänze reduziert wird.

Andere bekannte Verfahren zum weiteren Individualisieren der Brackets und somit zum weiteren Minimieren der notwendigen Drahtbiegungen bedingen zum Teil hohen technischen Aufwand oder sind mit aufwendigen, große Fingerfertigkeit erfordernden Handhabungen verbunden, oder aber überlassen die Präzision der Manipulationen dem Augenmaß.

Aus der US-PS 4 014 096 ist es bekannt, die Bracket-Öffnungen individuell zu fräsen, was mit unverhältnismäßig großem technischen Aufwand verbunden ist.

In der US-PS 4 160 322 ist ein Verfahren der eingangs genannten Art zum Individualisieren der Brackets geoffenbart, bei dem die Brackets zum Idealmodell mittels einer Schablone direkt gehalten werden, welche Schablone die Bogenform des orthodontischen Drahtbogens aufweist, und bei dem eine Abgußform der Repliken des Idealmodells hergestellt wird. Dies hat den Nachteil, daß das Verfahren einerseits nicht zum Setzen von solchen Brackets, bezeichnet als "Molaren-Röhrchen", geeignet ist, welche zum Anbringen an den Backenzähnen besonders ausgebildet sein müssen, und andererseits die der Übertragung der Brackets vom Idealmodell auf die Patientenzähne dienende Abgußform mangels Spielraum im Bereich der Schablone die Brackets nur sehr labil und mit wenig Retention umfassen kann.

Aus der US-PS 3 949 478 sind ein Verfahren und eine Vorrichtung der eingangs genannten Art bekannt, welches Verfahren eine Vielzahl von Geschicklichkeit und Augenmaß erfordernden Verfahrensschritten und eine sehr komplizierte Vorrichtung zum Positionieren der Brackets erfordert.

Die europäische Patentanmeldung Publ.Nr.0084 443 offenbart ein Verfahren sowie eine Vorrichtung der eingangs genannten Art, wobei vor der Abformung des Patientengebisses an der späteren Befestigungsstelle des Brackets am Patientenzahn mittels aufgebrachten Klebstoffs oder aufgeklebter Plättchen Orientierungsstrukturen geschaffen werden, welche zum späteren Positionieren und Befestigen der an den Basen individualisierten Brackets dienen. Das Individualisieren der Brackets erfolgt dabei durch Unterfüttern der Basen der Brackets, welche durch einen mittels einer Halterung fixierten orthodontischen Draht an die Zahnrepliken des Idealmodells gehalten werden. Ein Nachteil dieses Verfahrens besteht darin, daß zur Festlegung der räumlichen Zuordnung des Brackets zum Patientenzahn eine Struktur im Befestigungsbereich des Brackets verwendet wird, welche Struktur bei einem etwaigen Verlust des Brackets während der Behandlung ebenfalls verloren geht, sodaß keine Reproduzierbarkeit gegeben ist. Ein weiterer Nachteil wird dadurch bedingt, daß beim individuellen Unterfüttern der Bracket-Basen das Idealmodell an die vom Drahtbogen gehaltenen Brackets herangeschoben wird, weshalb das Verfahren für jene Kieferformen ungeeignet ist, bei welchen der Zahnbogen im Bereich der zweiten Molaren gleich breit oder schmäler als im Bereiche der ersten Molaren ist. Schließlich sind aus der US-PS 4 183 141 ein Verfahren und eine Vorrichtung bekannt, bei der ein Bracket mittels eines Bracket-Trägers an bestimmter Stelle am Zahn positioniert werden kann. Das Bracket wird dabei mittels einer geschiebeartigen Vorrichtung an die Zahnreplik oder an den Zahn angedrückt, wobei bei der Andrückbewegung die Zahnoberfläche selbst den Anschlag gegenüber dem Bracket bildet. Der Nachteil dieser Vorrichtung besteht darin, daß die direkte Anlage des Brackets an der Zahnoberfläche die Lage der schlitzartigen Bracketöffnungen tangential zur Zahnoberfläche bestimmt, sodaß kein Ausgleich für unterschiedliche Zahndicken und Rotationserfordernisse erfolgt und demnach zahlreiche Abwinkelungen des in die Bracketöffnungen eingefügten orthodontischen Drahtes bedingt werden.

Aufgabe der gegenständlichen Erfindung ist es, ein Verfahren der eingangs genannten Art sowie eine Vorrichtung zu dessen Durchführung anzugeben, durch welche die Nachteile der bekannten Verfahren und Vorrichtungen vermieden werden, wobei bei einfacher Handhabung labormäßig eine präzis individualisierte orthodontische Apparatus herstellbar ist, welche vom Arzt exakt an den Patientenzähnen befestigt werden kann und die jeweils an den individuellen Zahnbogen des Patienten anpaßbar ist. Bei Verlust des Brackets sollen des Individualisieren des Ersatz-Brackets und dessen Positionieren am Zahn rasch und reproduzierbar durchzuführen sein.

Weiters soll die Lagerhaltung vieler unterschiedlicher Brackettypen, inclusive solcher als Molarenröhrchen ausgebildete, auf eine Mindestzahl herabgesetzt werden können. Dies wird erfindungsgemäß dadurch erzielt, daß an der Führungseinrichtung geführte, mit je einem Bracket versehene Bracket-Träger der jeweiligen Zahnreplik entsprechend angeordnet werden, wonach die Brackets in ihrer in Bezug auf ihre zugeordnete Zahnreplik gewünschten Lage mittels der Bracket-Träger derart justiert werden, daß die Basen ihrer Öffnungen entlang einer Linie aufeinanderfolgend aneinandergereiht eine mindestens segmentweise stetig verlaufende Krümmung ergeben, welche den idealen Verlauf der dem Zahn zugewandten Kante des orthodontischen Drahtes angibt, wobei in den Bereichen der Schneidkanten bzw. der Kauflächen der Zahnrepliken an diese anliegend mindestens ein über mindestens eine Replik reichendes Negativ, welches den der klinischen Zahnkrone entsprechenden Teil der Repliken teilweise abdeckt, aus aushärtbarem Material hergestellt wird und jeweils ein vom Bracket-Träger abragender Referenzteil mit dem Negativ verbunden wird, worauf die nunmehr aus Negativ, Referenzteil, Bracket und Bracket-Träger gebildeten Referenz-Einheiten von der Zahnreplik sowie von der Führungseinrichtung gelöst werden, wobei gegebenenfalls das Negativ in jeweils einer Zahnreplik zugeordnete Segmente unterteilt wird, erforderlichenfalls jeweils die der Zahnoberfläche zugeordnete Fläche des Brackets mit einer aushärtbaren Ausgleichsmasse zur Ausfüllung von durch die Lage der Brackets gegebenen Zwischenräumen versehen wird und hierauf die mit der aushärtbaren Masse versehene Referenz-Einheit zur Abformung wieder auf die Zahnreplik aufgesetzt wird, worauf die Referenz-Einheiten auf die entsprechenden Patientenzähne aufgesetzt werden, jedes Bracket am Patientenzahn fixiert und hierauf von der übrigen Referenz-Einheit getrennt wird, worauf in die Bracketöffnungen der orthodontische Draht eingesetzt wird. Durch das erfindungsgemäße Verfahren kann weiters die durch das Idealmodell festgelegte okklusale Feineinstellung vom Arzt mit einem absoluten Minimum an erforderlichen Biegungen im orthodontischen Drahtbogen oder in dessen Segmenten und mit großer Zeitersparnis vorgenommen werden. Weitere Aufgaben der Feineinstellung, welche bislang einem im Anschluß an die festsitzende orthodontische Behandlung verwendeten abnehmbaren, als gnathologischen Positioner bekannten Gerät vorbehalten waren, können mittels der durch das erfindungsgemäße Verfahren individualisierten Brackets bereits während der festsitzenden Behandlungsphase vorweggenommen werden. Vorzugsweise erfolgt die Ausfüllung der Zwischenräume durch Unterspritzen mit Ausgleichsmasse.

Zur Vereinfachung des Verfahrens ist es von Vorteil, wenn das Negativ aller Repliken des Gebißmodells in einem einzigen Stück hergestellt wird.

Vorzugsweise werden die Brackets vor ihrer Fixierung am Patientenzahn mittels der Bracket-Träger positioniert.

Wenn weiters für die Herstellung des Negativs eine erste Schichte aus aushärtbarem Material auf die Repliken aufgebracht wird, worauf die Referenzteile mittels einer auf die erste Schichte aufgebrachten zweiten Schichte in das Negativ eingebunden werden, ist dadurch sowohl eine optimale Abformung als auch eine einfach herstellbare Verbindung zwischen Referenzteil und Negativ erzielbar.

Vorzugsweise erfolgt die Fixierung des Brackets am Zahn durch Klebung, wobei gegebenenfalls die Klebemasse die Ausgleichsmasse bildet.

Das erfindungsgemäße Verfahren ist mit einer Vorrichtung, welche eine feststellbare Führungseinrichtung mit an dieser versetzbar gelagerten Bracket-Trägern aufweist, durchführbar, bei welcher erfindungsgemäß die Führungseinrichtung eine zum idealen Verlauf des orthodontischen Drahtes mindestens annähernd parallele Führung für die Bracket-Träger aufweist, welche Führung zu den Bracket-Trägern gegengleich ausgebildet ist, und bei der die Bracket-Träger jeweils mit einem Referenzteil versehen und mit einem zugeordneten Bracket verbindbar sind. Hiedurch wird ein einfaches Ausrichten der Bracket-Träger auf die Zahnrepliken in radialer Richtung erzielt, wobei durch die spezielle Anordnung des Verlaufs des orthodontischen Drahtes und der Führungseinrichtung in der Länge nahezu einheitliche Bracket-Träger verwendbar sind. Weiters können der Referenzteil und der Bracket-Träger in ihrer Lage in Bezug aufeinander einstellbar sein.

Gemäß einem bevorzugten Merkmal ist die Führung aus einer Schiene gebildet, in welcher die Bracket-Träger verschiebbar gelagert sind.

Vorzugsweise weist der Bracket-Träger eine zylindrische Erhebung, mittels welcher er in der Führung gleitbar ist, sowie weiters eine segmentartige Erhebung in einem Abstand zur zylindrischen Erhebung auf, welcher Abstand dem Abstand zwischen der Wange der Führung und derjenigen Kante der Führungseinrichtung entspricht, die dem Gebißmodell zugeordnet sind. Dies ergibt eine Dreipunkt-Führung, wodurch die radiale Einstellung des Bracket-Trägers erzielbar ist.

Gemäß einem bevorzugten Merkmal befindet sich der Bracket-Träger mit der Bracketöffnung in Eingriff. Dadurch wird die Bracket-öffnung nicht nur zur Aufnahme des orthodontischen Drahtes sondern auch zur Halterung des Brackets am Bracket-Träger genutzt.

Weiters kann der Referenzteil mit dem Bracket-Träger lösbar verbunden sein. Vorzugsweise ist der Referenzteil mehrteilig, wobei die Teile in ihrer Lage zueinander einstellbar sind.

Um eine torsionsfreie, simple Verbindung zwischen dem Referenzteil und dem Bracket-Träger zu erzielen ist es vorteilhaft, wenn der Bracket-Träger an seinem freien Ende eine Ausnehmung mit kantigem Querschnitt aufweist, welcher dem Querschnitt des Referenzteiles im zugeordneten Bereich annähernd entspricht.

Darüberhinaus kann der Referenzteil mit einem Vorsprung ausgebildet sein, welcher als Anschlag am Bracket-Träger dient. Der Vorsprung dient dadurch als Distanzhalter zum Bracket-Träger, was die Manipulationsfreiheit und leichte Entfernbarkeit des Trägers vom geklebten Bracket erhöht.

Eine weitere einfache Verbindung zwischen dem Bracket-Träger und dem Referenzteil wird dadurch erzielt, wenn der Bracket-Träger mit einem freien Ende ausgebildet ist, welches eine gegengleich ausgebildete Ausnehmung des Referenzteiles durchsetzt.

Wenn dabei der die Ausnehmung durchsetzende Abschnitt des Bracket-Trägers einen kantigen Querschnitt aufweist, wird eine torsionsfreie Verbindung erreicht.

Vorzugsweise ist das freie Ende des Referenzteiles von einer über einen Teil seiner Länge reichenden anliegenden Hülse bedeckt, welche an einem am Referenzteil ausgebildeten Anschlag zur Anlage kommt. Dies erzielt eine bessere Manipulationsfreiheit an die Lage der Zähne. Zur exakten Lagefixierung kann der Referenzteil einen kantigen Querschnitt aufweisen.

Gemäß einem weiteren bevorzugten Merkmal weist der Bracket-Träger an seinem das Bracket tragenden Ende eine entsprechend dem Verlauf des zugeordneten Drahtbogenabschnitts gekrümmte Stirnfläche auf.

Vorzugsweise ist die Führungseinrichtung in ihrer Hauptebene mindestens annähernd gemäß der Wölbung der Kauebene des zugeordneten Gebißmodells verformbar und feststellbar. Ebenso kann die Führungseinrichtung in ihrer Hauptebene mindestens annähernd spiegelbildlich zur Wölbung der Kauebene des zugeordneten Gebißmodells verformbar und feststellbar sein. Die beiden letztgenannten bevorzugten Ausbildungsformen sind beispielsweise für Korrekturen von stark ausgeprägtem Überbiß im Frontzahnbereich geeignet, da auch in einem solchen Fall dadurch die Bracket-Plazierung an den Zähnen ermöglicht ist.

Vorzugsweise ist die Führungseinrichtung in Bezug auf ihren bogenförmigen Verlauf verformbar, wobei die Krümmung sowie die lichte Weite zwischen den Schenkeln des Bogens einstellbar sind.

Ausführungsbeispiele der Erfindung werden nachfolgend anhand von Zeichnungen näher erläutert, wobei das erfindungsgemäße Verfahren in Verbindung mit der Beschreibung von Ausführungsbeispielen der Vorrichtung für die Durchführung des Verfahrens beschrieben wird. Hiebei zeigen:

Fig. 1 eine erfindungsgemäße Vorrichtung und ein ideales Gebißmodell in Draufsicht,

Fig. 2 bis 4, 5 bis 7 und Fig. 8 verschiedene Ausführungsformen von Bracket-Trägern und Referenzteilen sowie

Fig. 9 eine Ausbildungsform eines Bracket-Trägers für als Molarenröhrchen ausgebildete Brackets mit besonderer Ausbildung eines Referenzteiles, in Schrägansicht am Patientenzahn.

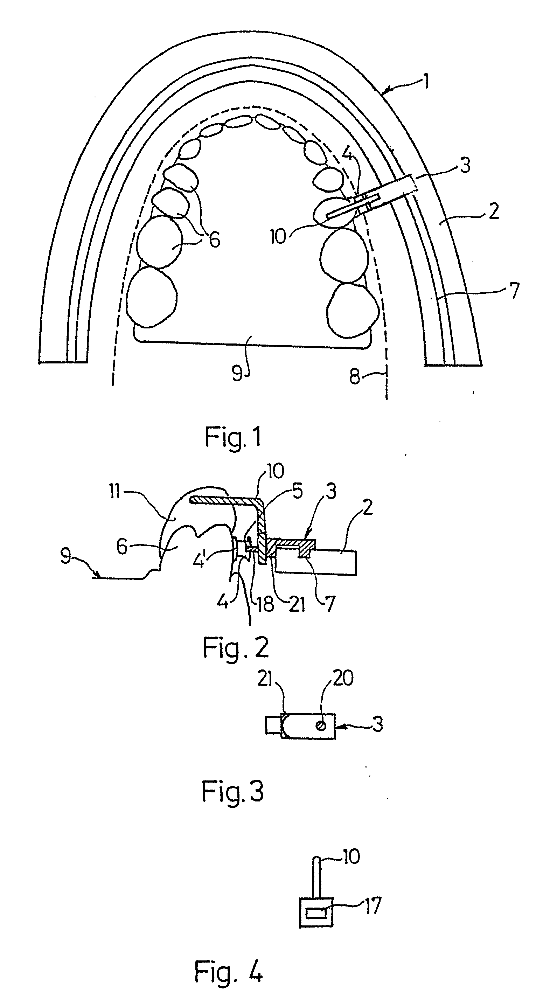

In Fig. 1 ist ein ideales Gebißmodell 9, an welches eine Vorrichtung 1 zur Herstellung einer orthodontischen Apparatur herangebracht wurde, in Draufsicht dargestellt. Nach Abformung der Kiefer des Patienten wird ein Gebißmodell mit den zu korrigierenden Zahnfehlstellungen, nachfolgend als Malokklusionsmodell bezeichnet, angefertigt. Durch Separierung der falsch stehenden Zahnrepliken 6 voneinander und von den Modellbasen und nachfolgendes, als Set-up bekanntes, Neuanordnen der Zahnrepliken in die therapeutisch angestrebten Idealpositionen zueinander und zu den Zähnen des Gegenkiefers, entsteht das sogenannte Idealmodell 9. Zu den einzelnen Zahnrepliken 6 eines solchen Idealmodells 9 werden Brackets 4 mit ihren Öffnungen 5, welche zum überwiegenden Teil aus Schlitzen gebildet sind, in eine nachfolgend als Idealanordnung bezeichnete Lagebeziehung gebracht, welche jeweils der späteren Befestigungsstelle am Patientenzahn entspricht, wobei die Anordnung aller Bracketöffnungen 5 mit dem Verlauf 8 des sogenannten Idealdrahtbogens oder Segmenten desselben übereinstimmt. Der Verlauf des Idealdrahtbogens wird individuell für das jeweilige Gebißmodell 9 festgelegt und während der Behandlung beibehalten. Die Idealanordnung der Brackets 4 zum Idealmodell 9 erfolgt durch Bracket-Träger, - wobei lediglich ein Bracket-Träger 3 dargestellt ist, - welche von einer mit der festgelegten Idealdrahtbogenform 8 korrespondierenden schablonenartigen Führungseinrichtung 2 jeweils so zu den Zahnrepliken 6 des Idealmodelles 9 positioniert werden, daß die Basen der Öffnungen der von den Bracket-Trägern getragenen Brackets 4 sich mit dem Verlauf 8 des Idealdrahtbogens decken. Die dem Bracket 4 zugewandte Kante des bracket-tragenden Teiles des Bracket-Trägers 3 ist gerade oder je nachdem, in welchem Abschnitt innerhalb des Idealdrahtbogens sich das betreffende Bracket bei Behandlung befindet, mit einer dem Idealbogenverlauf entsprechenden Krümmung ausgestattet. Dementsprechend wird beispielsweise die Krümmung des bracket-tragenden Teiles im Falle eines Eckzahnbrackets am meisten ausgeprägt sein.

Die jeweils verwendete Vorrichtung wird in geeigneter Weise von einer Halterung getragen. Beim gezeigten Ausführungsbeispiel weist die Führungseinrichtung 2 eine schienenartige Führungsrille 7 von rechteckigem Querschnitt auf. Die Führungsrille 7 sowie die dem Idealmodell 9 zugewandte Kante verlaufen parallel zum Verlauf 8 des Idealdrahtbogens.

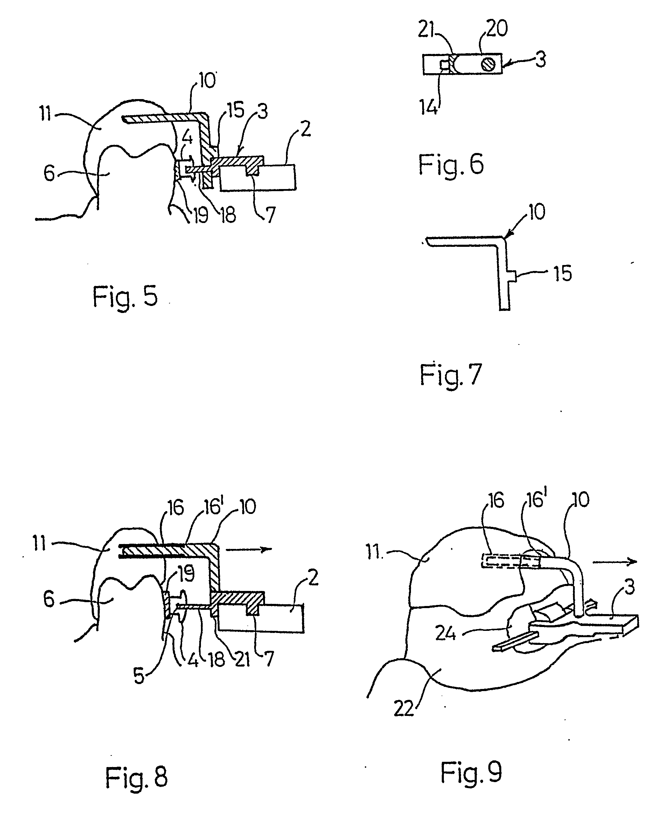

Wie aus der Fig. 2, einem teilweisen Schnitt durch ein Gebißmodell 9 und eine erfindungsgemäße Vorrichtung, sowie den Fig. 3 und 4, Ansichten eines Details, hervorgeht, weist die untere Seite des Bracket-Trägers 3 eine zylindrische Erhebung 20, welche mit wenig Spiel exakt in die Führungsrille 7 eingreift, sowie eine segmentförmige Erhebung 21 auf, welche beim Einsetzen des Bracket-Trägers 3 in die Führungsrille 7 dicht an der dem Idealmodell zugewandten Kante der Führungsvorrichtung 2 anliegt. Die Erhebungen 20 und 21 bewirken eine stets radiale Einstellung der Bracket-Träger 3 zum Verlauf des Idealdrahtbogens und die Überdeckung des bracket-tragenden Teiles 18 und damit der schlitzartigen Bracketöffnungen 5 mit dem Verlauf des Idealdrahtbogens. Der mit dem Bracket-Träger 3 horizontal verschieblich verbundene Referenzteil 10 weist ein Öffnung 17 für die Aufnahme und torsionsfreie Führung der Bracket-Träger 3 auf, wobei die Öffnungsfläche des Bracket-Trägers 3 gegenüber dem senkrechten Abschnitt des Referenzteiles 10 einen Anschlag bei der Verschiebung bildet. Die einzelnen Referenzteile 10 ragen mit ihren horizontalen Abschnitten über die okklusalen bzw. inzisalen Konturen der Zanrepliken 6 des Idealmodells 9 und werden mit einem die Zahnoberfläche teilweise buccal bzw. labial, okklusal bzw. inzisal sowie lingual abbildenden, auf dem Idealmodell beispielsweise mittels einer aushärtbaren Masse hergestellten bogenförmigen Negativ 11 verbunden. Dieses wird nach dem Abheben in Einzelzähnen zugeordnete Segmente unterteilt. Die stabile Verbindung mit dem Negativ 11 kann gleichzeitig während dessen Herstellung durchgeführt werden. Das Negativ 11 kann aber auch schon vor der Positionierung der Brakkets 4 hergestellt und danach mit den Referenzteilen 10 verbunden weden. Nun wird das durch das Negativ 11 in seiner Idealanordnung zur jeweiligen Zahnreplik 6 des Idealmodells 9 positionierte Brakket 4 an seiner Basis 4' individualisiert. Die Segmente mit den Brackets 4, den Bracket-Trägern 3 und den Referenzteilen 10 werden jetzt als stabile Einheit von der Zahnreplik 6 abgehoben und gegebenenfalls unterteilt, die Bracketbasis 4' wird mit einer geeigneten aushärtenden Ausgleichsmasse 19 versehen, die bei Wiederaufsetzen des Brackets 4 auf die Zahnreplik 6 den Spalt zwischen Bracketbasis 4' und Zahnoberfläche durch besagte Ausgleichsmasse 19 ausfüllt. Die so mit einer individuellen Basisstruktur 19 versehenen Brackets 4 werden von der Zahnreplik 6 abgehoben, wobei die Ausgleichsmasse 19 fest an der Bracketbasis 4' haftet, und mit Hilfe des Negativs 11 auf den Patientenzahn übertragen und dort z. B. durch Klebung befestigt. Die Verschiebbarkeit des Bracket-Trägers 3 gegenüber dem Referenzteil 10 kann sowohl beim Formen der individuellen Bracketbasis als auch beim Kleben auf den Patientenzahn genützt werden. Vor dem Aufsetzen des Brackets 4 auf die Zahnreplik bzw. auf den Patientenzahn kann der Bracket-Träger 3 aus der Öffnung 17 etwas zurückgezogen werden, sodaß die Ausgleichsmasse 19 bzw. der Kleber nicht schon beim aufsetzen abgestreift werden, sondern erst nach dem Positionieren des Brackets 4 am Zahn an diesen herangedrückt werden, indem der Bracket-Träger 3 wieder in die Öffnung 17 des Referenzteiles 10 bis zum Anschlag geschoben wird. Nach erfolgter Befestigung des Brackets 4 am Patientenzahn wird der Bracket-Träger 3 aus dem Bracketschlitz 5 gezogen, um ein Abheben von Referenzteil 10 und Negativ 11 zu ermöglichen.

Die Konfiguration Bracket-Träger 3 zu Referenzteil 10 kann, wie die Fig.5 bis 7 zeigen, auch dergestalt sein, daß der mit einem Vorsprung 15 versehene Referenzteil 10 aus einer als torsionsfreie Führung ausgebildeten Öffnung 14 des Bracket-Trägers 3 gezogen werden kann.

Es können aber, wie in Fig.8 gezeigt, Bracket-Träger 3 und Referenzteil 10 aus einem Stück bestehen und mit einem Anschlag 16' in einer kantigen, als torsionsfreie Führung dienenden Hülse 16 verschiebbar sein, wobei die Hülse 16 mit dem Negativ 11 verbunden ist.

Fig. 9 zeigt eine Schrägansicht einer Referenzeinheit an einem Patientenzahn 22, mit einem analog dem Bracket-Träger 3 in Fig. 8 zur Positionierung und Übertragung von Bukkalröhrchen 24 ausgebildeten Träger 3, welcher das Röhrchen indirekt über einen die Innenlichte fast vollständig ausfüllenden Vierkantdraht am Patientenzahn 22 fixiert. Der Referenzteil 10 ist über eine Hülse 16 mit Anschlag 16' in einem Segment des Negativs 11 gehalten.

Das Verfahren zur Herstellung einer individualisierten Bracketbasis kann abgewandelt werden, indem die Ausgleichsschichte zwischen dem ideal zum Zahn angeordneten Bracket und der Zahnoberfläche nicht am Modell, sondern beim Positionieren des Brackets am Patientenzahn direkt durch den Kleber selbst gebildet wird.

Die zur Durchführung des erfindungsgemäßen Verfahrens bestimmte Vorrichtung kann mit einem Satz verschieden geformter Führungseinrichtungen ausgestattet sein, welche dadurch verschiedenen Kieferformen entsprechen.

Das dieser Erfindung zugrundeliegende Verfahren und die Vorrichtungen hierfür können über die dargestellten Beispiele hinaus vielfach variiert werden, ohne dabei vom Grundkonzept und deren Tragweite abzuweichen. Auch ist die Erfindung für buccal wie für lingual an den Zähnen angebrachte Brackets gleichermaßen anwendbar. Darüberhinaus umfaßt die Erfindung auch deren Anwendung in Verbindung mit besonders ausgebildeten Brackets, z.B. Molarenröhrchen.

## Patentansprüche

1. Verfahren zur Herstellung einer orthodontischen Apparatur zur Korrektur der Lage der Zähne eines Patienten, welche Apparatur aus den einzelnen Zähnen zugeordneten, Öffnungen aufweisenden Brackets und aus einem mit diesen verbindbaren orthodontischen Draht besteht, wobei vom Gebiß des Patienten ein Malokklusionsmodell angefertigt wird, welches in die einzelnen Zahnrepliken unterteilt wird, worauf durch Anordnung der einzelnen Zahnrepliken dieses Modells in deren dem Behandlungsziel entsprechender Lage ein ideales Gebißmodell hergestellt wird, worauf das Gebißmodell sowie eine Führungseinrichtung in einer bestimmten Lage in Bezug aufeinander fixiert werden, dadurch gekennzeichnet, daß an der Führungseinrichtung (2) geführte,mit je einem Bracket (4) versehene Bracket-Träger (3) der jeweiligen Zahnreplik (6) entsprechend angeordnet werden, wonach die Brackets (4) in ihrer in Bezug auf ihre zugeordnete Zahnreplik (6) gewünschten Lage mittels der Bracket-Träger (3) derart justiert werden, daß die Basen ihrer Öffnungen (5) entlang einer Linie aufeinanderfolgend aneinandergereiht eine mindestens segmentweise stetig verlaufende Krümmung ergeben, welche den idealen Verlauf (8) der dem Zahn zugewandten Kante des orthodontischen Drahtes angibt, wobei in den Bereichen der Schneidkanten bzw. der Kauflächen der Zahnrepliken (6) an diese anliegend mindestens ein über mindestens eine Replik (6) reichendes Negativ (11), welches den der klinischen Zahnkrone entsprechenden Teil der Repliken (6) teilweise abdeckt, aus aushärtbarem Material hergestellt wird und jeweils ein vom Bracket-Träger (3) abragender Referenzteil (10) mit dem Negativ (11) verbunden wird, worauf die nunmehr aus Negativ (11), Referenzteil (10), Bracket (4) und Bracket-Träger (3) gebildeten Referenz-Einheiten von der Zahnreplik (6) sowie von der Führungseinrichtung (2) gelöst werden, wobei gegebenenfalls das Negativ (11) in jeweils einer Zahnreplik (6) zugeordnete Segmente unterteilt wird, erforderlichenfalls jeweils die der Zahnoberfläche zugeordnete Fläche (4') des Brackets (4) mit einer aushärtbaren Ausgleichsmasse (19) zur Ausfüllung von durch die Lage der Brackets (4) gegebenen Zwischenräumen versehen wird und hierauf die mit der aushärtbaren Masse versehene Referenz-Einheit zur Abformung wieder auf die Zahnreplik (6) aufgesetzt wird, worauf die Referenz-Einheiten auf die entsprechenden Patientenzähne aufgesetzt werden, jedes Bracket (4) am Patientenzahn fixiert und hierauf von der übrigen Referenz-Einheit getrennt wird, worauf in die Bracketöffnungen (5) der orthodontische Draht eingesetzt wird.

2. Verfahren nach Anspruch 1, dadurch gekennzeichnet, daß die Ausfüllung der Zwischenräume durch Unterspritzen mit Ausgleichsmasse erfolgt.

3. Verfahren nach Anspruch 1 oder 2, dadurch gekennzeichnet, daß das Negativ (11) aller Repliken (6) des Gebißmodells (9) in einem einzigen Stück hergestellt wird.

4. Verfahren nach einem der vorhergehenden Ansprüche, dadurch gekennzeichnet, daß die Brackets (4) vor ihrer Fixierung am Patientenzahn mittels der Bracket-Träger (3) positioniert werden.

5. Verfahren nach einem der vorhergehenden Ansprüche, dadurch gekennzeichnet, daß für die Herstellung des Negativs (11) eine erste Schichte aus aushärtbarem Material auf die Repliken (6) aufgebracht wird, worauf die Referenzteile (10) mittels einer auf die erste Schichte aufgebrachten zweiten Schichte in das Negativ (11) eingebunden werden.

6. Verfahren nach einem der Ansprüche 1 bis 5, dadurch gekennzeichnet, daß die Fixierung des Brackets (4) am Zahn durch Klebung erfolgt, wobei gegebenenfalls die Klebemasse die Ausgleichsmasse bildet.

7. Vorrichtung, welche eine Führungseinrichtung mit an dieser versetzbar gelagerten Bracket-Trägern aufweist, zur Durchführung des Verfahrens nach einem der Ansprüche 1 bis 6, dadurch gekennzeichnet, daß die Führungseinrichtung (2) eine zum idealen Verlauf (8) des orthodontischen Drahtes mindestens annähernd parallele Führung (7) für die Bracket-Träger (3) aufweist, welche Führung (7) zu den Bracket-Trägern (3) gegengleich ausgebildet ist, und daß die Bracket-Träger (3) jeweils mit einem Referenzteil (10) versehen und mit einem zugeordneten Bracket (4) verbindbar sind.

8. Vorrichtung nach Anspruch 7, dadurch gekennzeichnet, daß der Referenzteil (10) und der Bracket-Träger (3) in ihrer Lage in Bezug aufeinander einstellbar sind.

9. Vorrichtung nach Anspruch 7 oder 8, dadurch gekennzeichnet, daß die Führung aus einer Schiene (7) gebildet ist, in welcher die Bracket-Träger (3) verschiebbar gelagert sind.

10. Vorrichtung nach einem der Ansprüche 7 bis 9, dadurch gekennzeichnet, daß der Bracket-Träger (3) eine zylindrische Erhebung (20), mittels welcher er in der Führung (7) gleitbar ist, sowie weiters eine segmentartige Erhebung (21) in einem Abstand zur zylindrischen Erhebung (20) aufweist, welcher Abstand dem Abstand zwischen der Wange der Führung (7) und derjenigen Kante der Führungseinrichtung (2) entspricht, die dem Gebißmodell (9) zugeordnet sind.

11. Vorrichtung nach einem der Ansprüche 7 bis 10, dadurch gekennzeichnet, daß sich der Bracket-Träger (3) mit der Bracketöffnung (5) in Eingriff befindet.

12. Vorrichtung nach einem der Ansprüche 7 bis 11, dadurch gekennzeichnet, daß der Referenzteil (10) mit dem Bracket-Träger (3) lösbar verbunden ist.

13. Vorrichtung nach einem der Ansprüche 7 bis 12, dadurch gekennzeichnet, daß der Referenzteil (10) mehrteilig ist, wobei die Teile in ihrer Lage zueinander einstellbar sind.

14. Vorrichtung nach einem der Ansprüche 7 bis 13, dadurch gekennzeichnet, daß der Bracket-Träger (3) an seinem freien Ende eine Ausnehmung (14) mit kantigem Querschnitt aufweist, welcher dem Querschnitt des Referenzteiles (10) im zugeordneten Bereich annähernd entspricht.

15. Vorrichtung nach Anspruch 14, dadurch gekennzeichnet, daß der Referenzteil (10) mit einem Vorsprung (15) ausgebildet ist, welcher als Anschlag am Bracket-Träger (3) dient.

16. Vorrichtung nach einem der Ansprüche 7 bis 15, dadurch gekennzeichnet, daß der Bracket-Träger (3) mit einem freien Ende ausgebildet ist, welches eine gegengleich ausgebildete Ausnehmung (17) des Referenzteiles (10) durchsetzt.

17. Vorrichtung nach Anspruch 16, dadurch gekennzeichnet, daß der die Ausnehmung (17) durchsetzende Abschnitt des Bracket-Trägers (3) einen kantigen Querschnitt aufweist.

18. Vorrichtung nach einem der Ansprüche 7 bis 17, dadurch gekennzeichnet, daß das freie Ende des Referenzteiles (10) von einer über einen Teil seiner Länge reichenden anliegenden Hülse (16) bedeckt ist, welche an einem am Referenzteil (10) ausgebildeten Anschlag (16') zur Anlage kommt.

19. Vorrichtung nach einem der Ansprüche 7 bis 18, dadurch gekennzeichnet, daß der Referenzteil (10) einen kantigen Querschnitt aufweist.

20. Vorrichtung nach einem der Ansprüche 7 bis 19, dadurch gekennzeichnet, daß der Bracket-Träger (3) an seinem das Bracket (4) tragenden Ende (18) eine entsprechend dem Verlauf des zugeordneten Drahtbogenabschnitts gekrümmte Stirnfläche aufweist.

21. Vorrichtung nach einem der Ansprüche 7 bis 20, dadurch gekennzeichnet, daß die Führungseinrichtung (2) in ihrer Hauptebene mindestens annähernd gemäß der Wölbung der Kauebene des zugeordneten Gebißmodells (9) verformbar und feststellbar ist.

22. Vorrichtung nach einem der Ansprüche 7 bis 20, dadurch gekennzeichnet, daß die Führungseinrichtung (2) in ihrer Hauptebene mindestens annähernd spiegelbildlich zur Wölbung der Kauebene des zugeordneten Gebißmodells (9) verformbar und feststellbar ist.

23. Vorrichtung nach einem der Ansprüche 7 bis 22, dadurch gekennzeichnet, daß die Führungseinrichtung (2) in Bezug auf ihren bogenförmigen Verlauf verformbar ist, wobei die Krümmung sowie die lichte Weite zwischen den Schenkeln des Bogens einstellbar sind.

Fig. 1

Fig. 2

Fig. 3

Fig. 4

Fig. 5

Fig. 6

Fig. 7

Fig. 8

Fig. 9